Europäisches Patentamt

European Patent Office

Office européen des brevets

(11) Publication number: 0 509 684 A2

# EUROPEAN PATENT APPLICATION

(21) Application number: 92302940.9

(22) Date of filing: 03.04.92

(51) Int. Cl.⁵: **F22B 31/00**, F23C 11/02, B01J 8/18

(30) Priority: 15.04.91 US 684737

(43) Date of publication of application:
21.10.92 Bulletin 92/43

(84) Designated Contracting States:
**ES GB IT PT**

(71) Applicant: FOSTER WHEELER USA CORPORATION
Perryville Corporate Park
Clinton New Jersey 08809-4000(US)

(72) Inventor: Abdulally, Iqbal Fazaleabas
13 Lilac Place
Randolph, New Jersey 07869(US)

(74) Representative: Hitchcock, Esmond Antony et al
Lloyd Wise, Tregear & Co. Norman House
105-109 Strand
London WC2R 0AE(GB)

(54) Fluidized bed reactor with extraction of particulate material.

(57) A fluidized bed reactor in which housing is defined by a plurality of upright walls, each wall being formed at least in part by a plurality of tubes. A horizontal grid plate extends across the housing and defines a upper combustion chamber for receiving particulate fuel material and a lower plenum for receiving a fluidizing gas, such as air, under pressure. Air is passed upwardly from the plenum, through the grid plate and into the upper combustion chamber to fluidized the fuel material therein and promote its combustion. Fluid is circulated through the tubes to cool the wall portions defining the combustion chamber and the plenum, and an extraction device is provided in the plenum for extracting the fuel particles that backflow from the upper combustion chamber, through the plate, and to the plenum.

EP 0 509 684 A2

This invention relates to a fluidized bed reactor and, more particularly, to such a reactor in which the particulate material that backflows from the fluidized bed is extracted from the system.

The use of fluidized beds has long been recognized as an attractive way of generating heat. In a normal fluidized bed arrangement, air is passed through a perforated plate, or grid, which supports a bed of particulate material, usually including a mixture of fuel material such as high sulfur bituminous coal and an adsorbent material for the sulfur released as a result of the combustion of the coal. As a result of the air passing through the bed, the bed behaves like a boiling liquid which promotes the combustion of the fuel. In addition to considerably reducing the amount of sulfur-containing gases introduced to the atmosphere, such an arrangement permits relatively high heat transfer rates, substantially uniform bed temperatures, combustion at relatively low temperatures, and a reduction in corrosion and boiler fouling.

In these types of arrangements the particulate material forming the fluidized bed tends to backflow downwardly through the perforations in the plate to the air plenum. To minimize this, a plurality of nozzles are often placed through the perforations in the plate and are designed to discharge the air into the bed. However, even with these nozzles, a certain amount of the particulate material backflows from the fluidized bed downwardly through the nozzles and into the air plenum where it accumulates in thus inhibiting the flow of air through the plenum and through the perforated plate into the fluidized bed. Also, the accumulated particulate material in the air plenum is relatively hot and can raise the temperature in the plenum to undesirable levels.

It is an object of the present invention to provide a reaction in which a gas, such of air is passes from an air plenum, through a perforated grid plate and into a bed of particulate fuel material to fluidize same.

It is a further object of the present invention to provide a fluidized bed reactor of the above type in which the particulate material that backflows from the fluidized bed to the air plenum is extracted from the plenum.

It is a still a further object of the present invention to provide a fluidized bed of the above type in which the walls forming the air plenum are water cooled.

Towards the fulfillment of these and other objects, the fluidized bed reactor of the present invention consists of a housing defined by a plurality of upright walls, each wall being formed at least in part by a plurality of tubes. A horizontal grid plate extends across the housing and defines a upper combustion chamber for receiving particulate fuel material and a lower plenum for receiving a fluidizing gas, such as air, under pressure. Perforations, nozzles, or the like are provided in the plate for passing the air upwardly from the plenum into the upper combustion chamber to fluidized the fuel material therein and promote its combustion. Fluid is circulated through the tubes to cool the wall portions defining the combustion chamber and the plenum, and an extraction device is provided in the plenum for extracting the fuel particles that backflow from the upper combustion chamber, through the plate, and to the plenum.

The above brief description, as well as further objects, features and advantages of the present invention will be more fully appreciated by reference to the following detailed description of the presently preferred but nonetheless illustrative embodiments in accordance with the present invention when taken in conjunction with the accompanying drawings wherein:

Fig. 1 is a schematic view depicting a fluidized bed reactor according to the present invention; and

Fig. 2 is a vertical, enlarged cross-sectional view taken along the line 2-2 of Fig. 1.

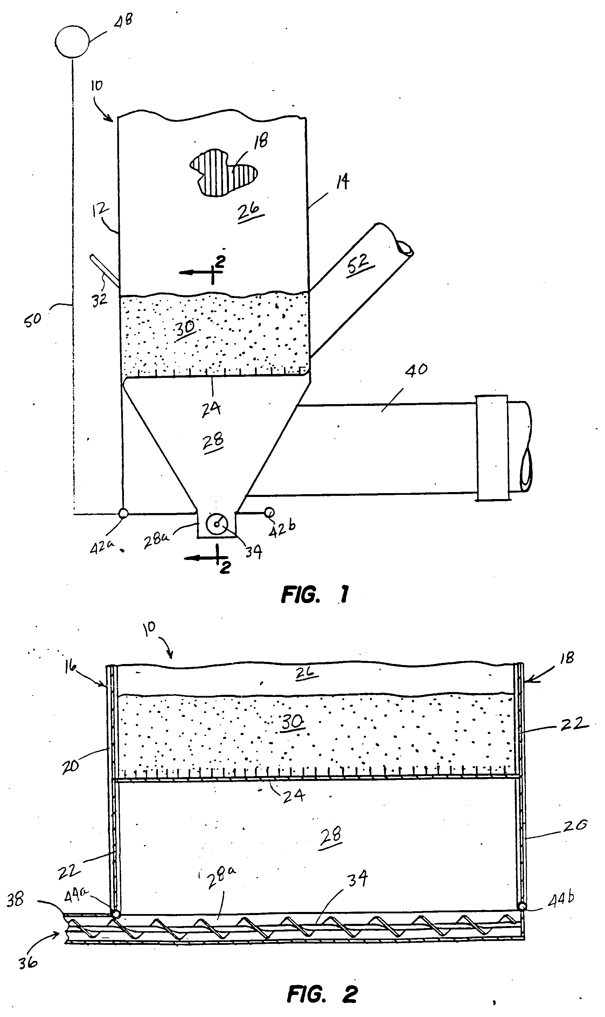

Referring to the drawings, the reference numeral 10 refers, in general, to an enclosure of the fluidized bed reactor of the present invention which may be in the form of a boiler, a combuster, a steam generator, or any similar type device. The enclosure 10 consists of a front wall 12, a rear wall 14, and two side walls 16 and 18 (Fig. 2). As shown in Fig. 2, each wall is formed by a plurality of vertically extending tubes 20 exposed in a spaced, parallel relationship and connected together by a plurality of elongated fins 22. The fins 22 extend for the entire lengths of the tubes 20 and are connected to diametrically opposed portions of each tube and between adjacent tubes to form a gas tight well.

The upper portion of the enclosure 10 is not shown for the convenience of presentation it being understood that it consists of a covection section, a roof and an outlet for allowing the combustion gases to discharge from the enclosure, to the separator, or the like.

A perforated grid plate 24 extends horizontally across the enclosure 10 to divide the enclosure into an upper combustion section 26 and lower plenum 28. A bed of particulate material, shown in general by the reference numeral 30, is disposed on the plate 24. The bed 30 can consist of a mixture of discrete particles of fuel material, such as bituminous coal and an adsorbent, such as limestone, for absorbing the sulphur released by the combustion of the fuel material. An inlet 32 is provided for introducing the particulate fuel material into the enclosure 10, it being understood that a separate inlet can also be provided for introducing the particulate adsorbent material in a similar manner.

Although not clear from the drawings, it is understood that the plate 24 is also formed by a plurality of spaced parallel tubes connected by fins in the manner described above in connection with the walls 12, 14, 16 and 18. The left hand portion of the plate 24 as viewed in Fig. 1, is bent downwardly and inwardly at an angle to the vertical, and that portion of the rear wall 14 extending below the plate 24 is also bent downwardly and inwardly towards the plate 24 so that the air plenum 28 is in the form of a hopper as viewed in Fig. 1.

A plurality of nozzles 32 extend through spaced openings formed through the fins forming the horizontal portion of the plate 24. Each nozzle 32 is adopted to receive air from the plenum 28 and discharge it into the bed 30, as will be described.

A cap, or lower housing, 28a is provided at the lower portion of the plenum 28 and receives a screw cooler 34 in the form of a elongated bit which, when rotated, will transfer material from right-to-left as viewed in Fig. 2. The screw cooler 34 extends into a duct 36 formed by an upper plate 38 and an extension of the cap 28a.

An air duct 40 (Fig. 1) communicates with the plenum 28 for introducing pressurized air from an external source into the plenum.

Headers 42a and 42b are provided at the lower ends of the walls 12 and 14, respectively, and headers 44a and 44b (Fig. 2) are disposed at the ends of the tubes forming the walls 16 and 18, respectively. It is understood that similar headers (not shown) are provided at the upper ends of the tubes forming the walls 12, 14, 16 and 18.

A steam drum 48 is located above the enclosure 10 and, for the convenience of presentation, is shown connected by a downcomer 50, to the header 42a. It is understood that the steam drum 48 is also connected to a supply of feed water, a steam outlet pipe or pipes and suitable downcomers, pipes, headers and the like (not shown) to the upper ends of the tubes forming the walls 12, 14, 16 and 18 and the ends of the tubes forming the plate 24 to establish a flow circuit for fluid, such as water, which is heated as it passes through the walls 12, 14, 16 and 18 and the plate 24.

A pipe 52 extends through the rear wall 14 in communication with the bed 30. Although not shown in the drawings, it is understood that the pipe 52 is connected to a separator which, in turn, receives a mixture of flue gases, combustion gases and entrained particulate material from the upper portion of the combustion chamber 26. The separator operates to separate the particulate material from the gases and direct the particulate material to the pipe 52 for recycling back to the bed 30.

In operation, pressurized air is introduced, via the duct 40, into the plenum 28 and passes up through the nozzles 32, into the combustion section 26 of the enclosure 10 and into the bed 30. The flow rate of the air so introduced is regulated so as to fluidize the bed of particulate material so that as the flow rate increases the density decreases as needed.

A light-off burner (not shown), or the like, is then fired to heat the material in the bed until the temperature reaches a predetermined level for combustion, and additional particulate fuel material is discharged, via the feeder 32, onto the upper surface of the bed 30 as needed.

After the bed 30 has been fluidized and has reached a predetermined elevated temperature in accordance with the foregoing, the light-off burner is turned off while the particulate fuel material is continually fed to the upper surface of the bed 30 in accordance with predetermined feed rates.

Any backflow of the particulate fuel material passing downwardly from the bed 30 through the nozzles 32 and into the plenum 28 falls by gravity towards the lower cap 28a of the plenum and into the screw cooler 34. The screw cooler 34 operates to discharge the fuel in a direction from right-to-left as viewed in Fig. 2 to the outlet conduit 36 for disposition.

Water is passed through the fluid circuit including the steam drum 48 and the headers 42a, 42b, 44a and 44b, and the headers disposed at the upper ends of tubes forming the walls 12, 14, 16 and 18 to transfer heat generated in the combustion section 26 to the fluid. The fluid is thus converted to steam and passed externally of the system via the fluid circuit.

The passage of the cooling fluid through walls 12, 14, 16 and 18, including the portions thereof extending below the plate 24 and that portion of the plate 24 forming the one side of the plenum 28, maintained the temperature in the plenum 28 at acceptable levels.

The reactor of the present invention enjoys several advantages. For example, the water cooled sealed enclosure 10 minimize refractory usage and therefore maintenance. Also, both the plate 24 and the structure forming the plenum 28 can thermally expand with the furnace thus eliminating hot expansion joints and reducing structural damage.

It is understood that several variations may be made in the foregoing without departing from the scope of the invention. For example, the extraction means can be in the form of a preumatic disposal system, a drag conveyor, or the like.

A latitude of modification, change and substitution is intended in the foregoing disclosure and in some instances some features of the invention will be employed without a corresponding use of other features. Accordingly, it is appropriate that the appended claims be construed broadly and in a manner consistent with the scope of the invention.

**Claims**

1. A fluidized bed reactor comprising a housing defined by a plurality of upright walls, each wall formed at least in part by a plurality of tubes, a plate extending across said housing and defining in said housing a combustion section for receiving particulate fuel material and a plenum section for receiving gas, said plate including means for passing said gas upwardly through said plate for fluidizing said fuel material and promoting the combustion thereof, means for circulating fluid through said tubes to cool said walls, and means for extracting from said plenum all particulate fuel material that backflows from said upper combustion chamber, through said passing means, and to said plenum section.

2. The reactor of claim 1 wherein said combustion section is formed in the upper portion of said housing and said plenum is formed in the lower portion of said housing.

3. The reactor of claim 2 wherein each wall is defined by a plurality of spaced parallel tubes extending for the length thereof, said walls defining a portion of said combustion section and a portion of said plenum section.

4. The reactor of claim 3 further comprising fins extending between and affixed to adjacent tubes to render each of said walls gas tight.

5. The reactor of claim 4 wherein the portion of at least one of said walls defining said plenum section is angled inwardly to form a hopper portion to direct said backflowed particulate material to the lower portion of said hopper portion.

6. The reactor of claim 5 wherein said plate is extended downwardly and angled inwardly to a form another portion of said hopper portion.

7. The reactor of claim 6 wherein said extraction means is located in the lower apex portion of said hopper portion.

8. The reactor of claim 7 wherein said extraction means comprises a screw conveyor disposed in said lower hopper portion for receiving said particulate material and discharging said material externally of said hopper portion.

9. The reactor of claim 1 wherein said extraction means comprises a screw conveyor disposed in said plenum for extracting said particulate material from said plenum externally of said plenum.

10. The reactor of claim 1 wherein said passing means comprises a plurality of openings extending through said plate.

11. The reactor of claim 10 wherein said passing means further comprises a plurality of nozzles extending through said openings in said plate for receiving said gas from said plenum and discharging said gas into said combustion chamber.

12. The reactor of claim 1 wherein said fluid circulating means comprises a steam drum for receiving fluid, header means connected to the ends of said tubes forming said walls, and means connecting said steam drum to said header means.

13. The reactor of claim 1 further comprising means for recycling back to said combustion section particulate material that is entrained by said air and the products of combustion of said fuel.

14. The reactor of claim 1 wherein said gas is air.

15. The reactor of claim 1 wherein said plate is formed at least in part by a plurality of tubes, said circulating means being adapted to circulate fluid through said latter tubes to cool said plate.

16. The reactor of claim 6 wherein said plate is formed at least in part by a plurality of tubes, said circulating means being adapted to circulate fluid through said latter tubes to cool said plate.

FIG. 1

FIG. 2